# EUROPEAN PATENT SPECIFICATION

(11) **EP 1 969 881 B1**
(45) Date of publication and mention of the grant of the patent: **16.02.2011**
(21) Application number: 06824044.9
(22) Date of filing: 08.12.2006
(51) Int. Cl.: H04L 12/18, H04L 12/56

(54) **METHOD OF RECEIVING/TRANSMITTING AT LEAST ONE SERVICE IN A MOBILE COMMUNICATION SYSTEM**
VERFAHREN ZUM EMPFANGEN/SENDEN MINDESTENS EINES DIENSTES IN EINEM MOBILKOMMUNIKATIONSSYSTEM
PROCEDE DE RECEPTION/TRANSMISSION D'AU MOINS UN SERVICE DANS UN SYSTEME DE COMMUNICATION MOBILE

(30) Priority: 03.01.2006 KR 20060000590
(43) Date of publication of application: 17.09.2008
(73) Proprietor: LG Electronics Inc., Seoul 150-721 (KR)
(72) Inventor: LEE, Young Dae, Hanam-si, Gyeonggi-do 465-711 (KR); CHUN, Sung Duck, Anyang-si, Gyeonggi-do 431-773 (KR); JUNG, Myung Cheul, Seoul 156-832 (KR); PARK, Sung Jun, Gyeonggi-do 431-749 (KR); FISCHER, Patrick, F-92340 Bourg la Reine (FR)
(74) Representative: Urner, Peter
(86) International application number: PCT/KR2006/005338
(87) International publication number: WO 2007/078061

(56) References cited:
- EP-A1- 1 599 060
- EP-A1- 1 619 916
- EP-A2- 1 420 551
- WO-A1-2004/032552
- WO-A1-2005/101681
- WO-A1-2006/033521
- WO-A2-98/26625
- WO-A2-2005/018098
- US-A1- 2004 146 041
- US-A1- 2004 224 698

## Description

### TECHNICAL FIELD

The present invention relates to a mobile communication system, more particularly, to a method of receiving/transmitting at least one service in a mobile communication system.

### BACKGROUND ART

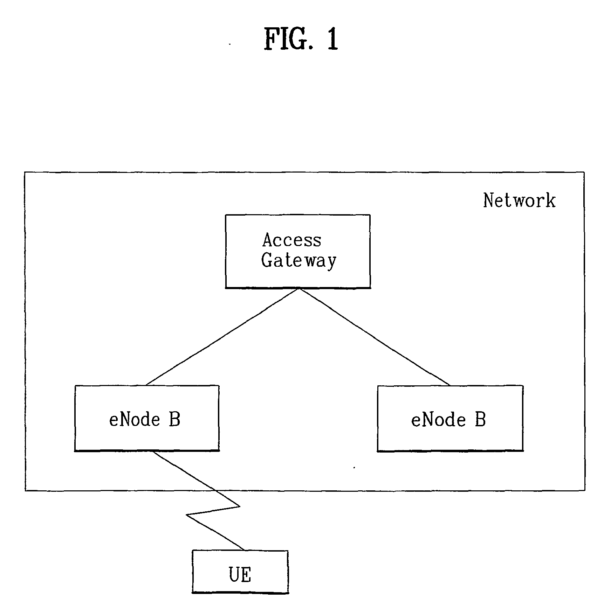

FIG. 1 is a block diagram of a network structure of E-UMTS (Evolved-Universal Mobile Telecommunications System) to which a related art and the present invention are applicable. An E-UMTS is a system evolving from the conventional UMTS and its basic standardization is currently handled by the 3GPP.

Referring to FIG. 1, an E-UMTS network includes a user equipment (hereinafter abbreviated 'UE'), a base station (hereinafter named 'eNode B') and an access gateway (hereinafter abbreviated 'AG') connected to an external network by being located at an end of the E-UMTS network. The eNode B includes at least one cell.

Layers of a radio interface protocol between a UE and a network can be classified into a first layer L1, a second layer L2 and a third layer L3 based on three lower layers of OSI (open system interconnection) reference model widely known in communication systems. A physical layer belonging to the first layer L1 offers an information transfer service using a physical channel. A radio resource control (hereinafter abbreviated 'RRC') located at the third layer plays a role in controlling radio resources between the UE and the network. For this, the RRC layer enables RRC messages to be exchanged between the UE and the network. The RRC layer can be distributively located at network nodes including an eNode B, an AG and the like or at either the Node B or the AG.

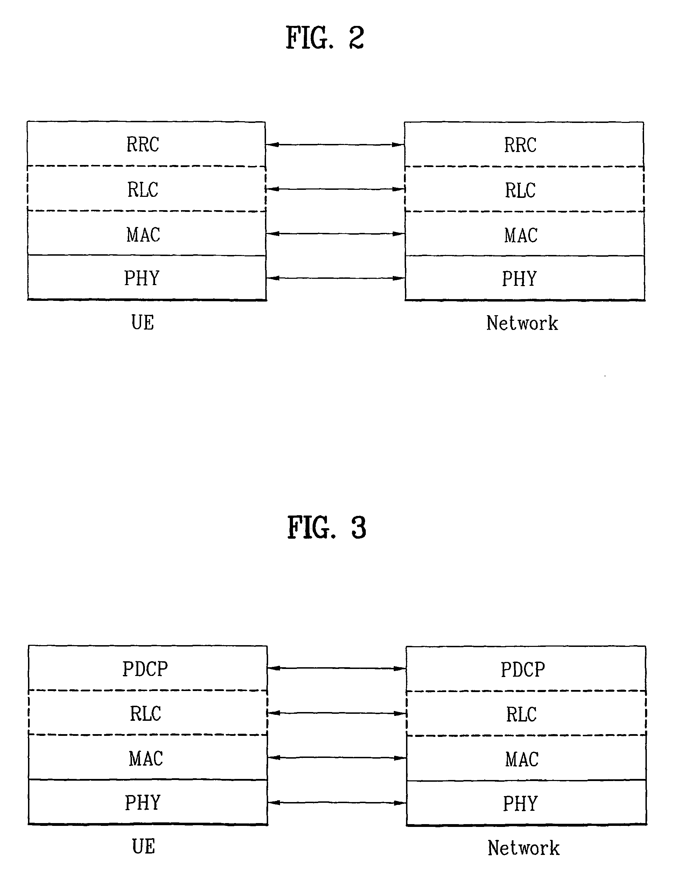

FIG. 2 is an architectural diagram of a control plane of a radio interface protocol between a UE (user equipment) and a UTRAN (UMTS terrestrial radio access network) based on the 3GPP radio access network standard. Referring to FIG. 2, a radio interface protocol vertically includes a physical layer, a data link layer, and a network layer and horizontally includes a user plane for data information transfer and a control plane for signaling transfer. The protocol layers in FIG. 2 can be classified into L1 (first layer), L2 (second layer), and L3 (third layer) based on three lower layers of the open system interconnection (OSI) standard model widely known in the communications systems.

The respective layers of a radio protocol control plane shown in FIG. 2 and a radio protocol user plane shown in FIG. 3 are explained as follows.

First of all, the physical layer as the first layer offers an information transfer service to an upper layer using physical channels. The physical layer (PHY) is connected to a medium access control (hereinafter abbreviated 'MAC') layer above the physical layer via transport channels. Data are transferred between the medium access control layer and the physical layer via the transport channels. Moreover, data are transferred between different physical layers, and more particularly, between one physical layer of a transmitting side and the other physical layer of a receiving side via the physical channels.

The medium access control (hereinafter abbreviated 'MAC') layer of the second layer offers a service to a radio link control (hereinafter abbreviated RLC) layer above the MAC layer via logical channels.

The RLC layer of the second layer supports reliable data transfer. A PDCP layer of the second layer performs a header compression function for reducing unnecessary control information to efficiently transmit data, which is transmitted using such an IP packet as IPv4 or IPv6, in a radio section having a relatively small bandwidth.

A radio resource control (hereinafter abbreviated 'RRC') layer located on a lowest part of the third layer is defined in the control plane only and is associated with configuration, reconfiguration and release of radio bearers (hereinafter abbreviated 'RBs') to be in charge of controlling the logical, transport and physical channels. In this case, the RB means a service offered by the second layer for the data transfer between the UE and the UTRAN.

As a downlink transport channel carrying data to UEs from the network, there is a broadcast channel (BCH) carrying system information and a downlink shared channel (SCH) carrying user traffic or control messages. The traffic or control messages of a downlink multicast or broadcast service can be transmitted via the downlink SCH or a separate downlink multicast channel (MCH). Meanwhile, as an uplink transport channel carrying data to the network from UEs, there is a random access channel (RACH) carrying an initial control message and a uplink shared channel (UL-SCH) carrying user traffic or control message.

The document WO 2004/032552 A1 discloses a method and an arrangement for indicating requirements for broadcast and multicast service (MBMS) reception. A basic method comprises a step of transmitting a message indicating the requirements over the air interface to terminals within the service range. An alternative method comprises a step of informing terminal's capabilities to the system which deduces on the basis of informed data whether the terminal is capable of joining the service or not. A wireless system comprising a network element and at least one wireless terminal operable in the system is presented. The wireless terminal is capable of receiving the broadcast message indicating the requirements and sending a capability notification. The network element is capable of receiving the notification and sending the message indicating the requirements.

The document WO 98/26625 A2 discloses a method in a cellular telecommunications network of informing the network of a plurality of operating capabilities of a mobile terminal. The method send the network protocol version, supported frequency bands, software vintage, firmware vintage, model number, and manufacturer's code, of the mobile terminal, etc. as the operating capabilities. The method begins with the steps of entering an access (intermediate) state at the mobile terminal and then transmitting a message from the network to the mobile terminal requesting the mobile terminal to transmit information regarding the operating capabilities of the mobile terminal. The capability request may be sent on a paging channel (PCH) or an access response channel (ARCH). This is followed by transmitting a capability report from the mobile terminal to the network, the capability report including the requested information. The capability report may include all of the capabilities of the mobile terminal, or may include a specified capability set. The method may optionally include the step of determining whether the network has been informed of the operating capabilities of the mobile terminal before transmitting the message from the network to the mobile terminal requesting the mobile terminal to transmit its capabilities information. Additional capabilities or updated capabilities may be retrieved from the mobile terminal by later transmitting a capability update request to the mobile terminal.

The document US 2004/146041 A1 discloses methods and system for preventing waste of radio resources in a communication system capable of providing a multimedia broadcast/ multicast service. The methods and systems involve generating and broadcasting radio access capability information associated with a specific service. This information is received by one or more terminals which then use the information to determine if they have the requisite capability to receive the service. Radio bearers are established for those terminals that have the capability to receive the service.

The document EP 1 599 060 A1 discloses a communication system applicable to Multimedia Broadcast Multicast Service MBMS in which a terminal may receive MBMS data sent by a plurality of base stations via common channels S-CCPCH, and dedicated service in which the terminal may receive dedicated data sent by one of the plurality of the base stations via a dedicated channel DPCH, the dedicated data being defined as data associated with a dedicated channel, wherein the communication system is characterized by: a plurality of base stations, each base station including a first transmitting unit configured to transmit MBMS data corresponding to MBMS via a common channel, and a second transmitting unit configured to transmit dedicated data via a dedicated channel; a terminal including receiving means disposed for receiving dedicated data transmitted from one of the second transmitting units via a dedicated channel and disposed for receiving MBMS data transmitted from the respective first transmitting units of at least two of the plurality of base stations via common channels for MBMS; and a selective combining unit configured to perform selective combining over the MBMS data received by the receiving means, wherein the terminal is configured to internally assign priority between reception of the MBMS and the dedicated service during selective combining; wherein the communication system further comprises a core network configured to be notified of a refusal of an assignment of a dedicated channel, at the time of selective combining, in case that the terminal has no capability to perform simultaneously the reception of the MBMS data via the common channels, and the reception of the dedicated data via the dedicated channel; and wherein the reception of the MBMS data via the common channels is prioritized over the reception of the dedicated data via the dedicated channel in the terminal.

The document US 2004/224698 A1 discloses a method and apparatus for establishing feedback channels in an MBMS (multimedia broadcast/ multicast service) for UMTS (Universal Mobile Telecommunication System) by selectively establishing RRC connections with terminals that are capable of transmitting uplink feedback information regarding the particular MBMS service. When requesting an RRC connection, a terminal sends an RRC connection message including information related to MBMS and the UTRAN selectively establishes an RRC connection with the terminal based on the information related to MBMS. The terminal indicates whether both a point- to- multipoint radio bearer and a point- to- point radio bearer can be received and, optionally, provides terminal class information in the RRC connection request message. The UTRAN gives higher priority to those terminals that indicate the capability to receive both a point- to- multipoint radio bearer and a point-to-point radio bearer when selecting terminals with which to establish an RRC connection, thereby maximizing feedback information regarding a particular MBMS service. The terminal class information allows the network to establish a priority for terminals that are better equipped or for users that pay a higher subscription fee when the number of subscribing terminals is such that a connection is not established with all terminals.

The document WO 2005/018098 A2 discloses a method and apparatus is provided that enables a mobile terminal which cannot simultaneously receive two physical channels to receive a service that utilizes two physical channels. In one embodiment, the service data and control information are transmitted on separate physical channels in a non-simultaneous manner such that the physical channel on which the data is transmitted includes an indication of when control information is available on the other physical channel on which the control information is transmitted, thereby facilitating the mobile terminal switching between the two physical channels in order to receive the service data and control information. In another embodiment, the service data and control information are transmitted on a single physical channel, thereby precluding the need for the mobile terminal to switch between two physical channels in order to receive the service data and control information.

The document WO 2005/101681 A1 discloses a method for efficiently transmitting and receiving control information messages necessary for a Multimedia Broadcast/Multicast Service (MBMS) provided in a mobile communication system. The method includes setting information elements for the control information messages to reduce unnecessary signaling overhead during the transmission of the control information. The method prevents a user equipment (UE) from performing duplicate reception on the control information, thereby reducing power consumption of a battery.

The document EP 1 420 551 A2 discloses a communication system providing a multimedia broadcast/multicast service (MBMS). Control message to be transmitted to user equipments (UEs) desiring to receive the MBMS service, paging message including information indicating an operation of transmitting a response to the paging message received, is transmitted to the UEs, and thereafter, the control information corresponding to the paging information is transmitted, thereby minimizing interference and use of uplink resource.

The document EP 1 619 916 A1 discloses a system for performing an attach procedure of a user equipment (UE) to a communication network (CN) such as a UMTS mobile communication network where the user equipment (UE) is in an always-on status. The system comprises: a first set of communication resources for use by the user equipment (UE) fully communicating over said network (CN) as well as a second, reduced set of communication resources for use by the user equipment (UE) for registration with said communication network (CN), the user equipment (UE) configured for including in the attach request sent (100) for registration with the network (CN) an information element indicative of the respective attach request being made for registration purposes only, and the system configured for assigning (118) to the user equipment (UE) a dedicated channel with the second, reduced set of communication resources when the user equipment (UE) issues an attach request including the information element indicative of the attach request being made for registration purposes only.

The document WO 2006/033521 A1 discloses a method for controlling a user equipment (UE) capable of receiving a point-to-multipoint service in a wireless communication system comprises receiving the point-to-multipoint service on a physical channel from a network. The method also comprises receiving a first scheduling indicator associated with a number of scheduling periods where there is no transmission related to the point-to-multipoint service, wherein each scheduling period is associated with a scheduling indicator. The method also comprises receiving the point-to-multipoint service through the physical channel after the number of scheduling periods where there is no transmission. The point-to-multipoint service and the first scheduling indicator are received on the same physical channel. The method may further comprise receiving a second scheduling indicator after the number of scheduling periods where there is no transmission. The method may further comprises receiving the point-to-multipoint service through the physical channel in response to the second scheduling indicator.

### DISCLOSURE OF INVENTION

In the related art, a network of a mobile communication system may not realize that a UE is receiving a point-multipoint service through a point-to-multipoint radio bearer. Further, the network is not able to recognize an amount of resources which the UE is using for receiving the point-multipoint service. For example, when the UE receives a UE-dedicated service and a point-multipoint service simultaneously, the network cannot recognize UE capability used for receiving the UE-dedicated service or the point-multipoint service among the total UE capability. Accordingly, there can be a problem that the UE is not able to normally receive the UE-dedicated service or the point-multipoint service, when the network provides the UE-dedicated service or the point-multipoint service while the UE receives the point-multipoint service or the UE-dedicated service, respectively.

Accordingly, the present invention is directed to a method of receiving/transmitting at least one service a mobile communication system that substantially obviates one or more of the problems due to limitations and disadvantages of the related art. The object is solved by the features of the independent claims.

In one embodiment of the present invention, a UE obtains information necessary for receiving a first service from a network node. The UE calculates resources needed for receiving the first service and a second service simultaneously based on the obtained information and transmits information associated with the calculated resources. The network node performs a scheduling of data transmission for transmitting the first and second service based on the resource information from the UE, so that the UE receives the first and second service without error.

The resources are UE resources necessary for the UE to receive the first service and/or the second service. For example, the resources may include at least one of an amount of data per time unit which the UE can process, a transmitting or receiving bandwidth, and an automatic repeat request (ARQ) capacity, etc.

The control information associated with at least one of a first and second service may includes a bandwidth for receiving the at least one of a first and second service, transmission power, transmission data rate, a scheme of channel coding and modulation, data sizes, etc. The network may be at least one of a base station, a Node B, an eNode B, a base station controller, and radio network controller (RNC). The first service is a point-multipoint service and the second service is a UE-dedicated service, and vice versa.

The resource information transmitted from the UE to the network node may include UE capability to be used for receiving at least one of the first and second services. For example, the resource information includes information associated with bandwidth for the first service and/or the second service, ARQ parameters, data sizes, transmission power, data rate, and a scheme of channel coding and modulation, etc. The resource information may further include a service identifier, a radio bearer identifier or a channel identifier for the first service and/or the second service.

The resource information can be transmitted periodically by the UE in accordance with instructions of the network node. Alternatively, the UE transmits the resource information to the network node when the UE has or is expected to have difficulties in receiving the first service and/or the second service due to limitations of resources. The network node controls transmission of data for the first service and/or the second service using the resource information received from the UE.

The UE can dynamically update the UE capability according to a combination of received services. Alternatively, the UE may dynamically update scheduling information of data transmission of the network node.

### BRIEF DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a network structure of E-UMTS (evolved universal mobile telecommunications system);
FIG. 2 is an architectural diagram of a control plane of a radio interface protocol between UE (user equipment) and UTRAN (UMTS terrestrial radio access network) based on the 3GPP radio access network standard;
FIG. 3 is a diagram of various layers in a radio protocol user plane;
FIG. 4 is a flow diagram illustrating a method of controlling transmission resources in a mobile communication system in accordance with one embodiment of the present invention; and
FIG. 5 is a flow diagram illustrating a method of controlling transmission resources in a mobile communication system in accordance with another embodiment of the present invention.

### BEST MODE FOR CARRYING OUT THE INVENTION

Reference will now be made in detail to the preferred embodiments of the present invention, examples of which are illustrated in the accompanying drawings.

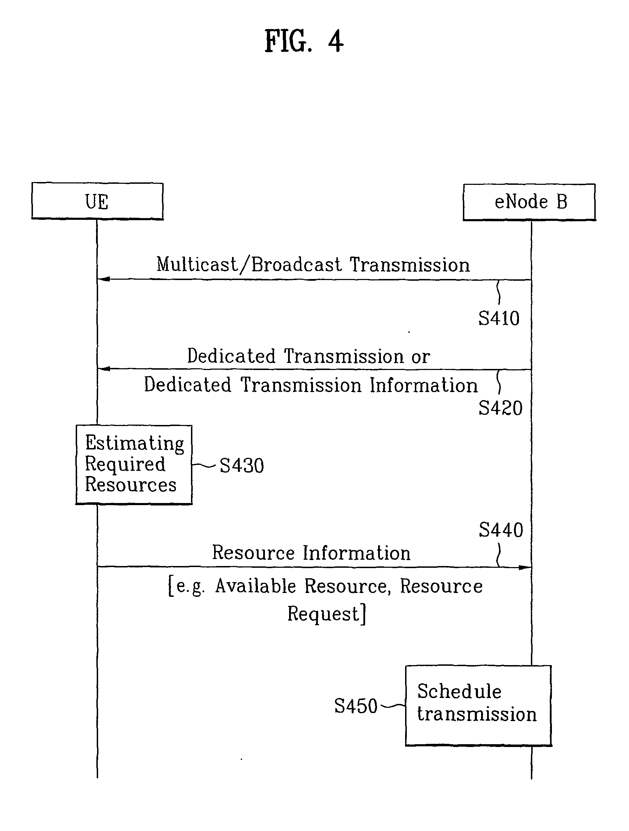

FIG. 4 is a flow diagram illustrating a method of controlling transmission resources in a mobile communication system in accordance with one embodiment of the present invention. The embodiment of FIG. 4 is an example that a UE receives a UE-dedicated service while the UE has been receiving a multicast/broadcasting service which is an example of a point-to-multipoint service.

Referring to FIG. 4, a UE is receiving data for a multicast/broadcasting service transmitted from an eNode B [S410]. The UE receives data for a UE-dedicated service or information associated with the data for the UE-dedicated service from the eNode B [S420]. The information associated with the data for the UE-dedicated service can be included to be transmitted in a paging message for the UE, a channel configuration message, a resource allocation message or a radio bearer configuration message related with the UE-dedicated service. The information associated with the data for the UE-dedicated service may includes transmission parameters (a size of data, a number of channel codes, bandwidth, a scheme of channel coding and modulation, ARQ parameters, etc.) and UE-capabilities for receiving the UE-dedicated service. In FIG. 4, the sequence of S410 and S420 can be changed.

The UE estimates resources available for receiving the multicast/broadcasting service and/or the UE-dedicated service and the UE determines whether it is possible to receive both the multicast/broadcasting service and the UE-dedicated service with total resources of the UE [S430]. Alternatively, the UE calculates resources required for receiving the multicast/broadcasting service and/or the UE-dedicated service.

The UE transmits resource information including the estimated resources available for receiving the multicast/broadcasting service and/or the UE-dedicated service [S440]. The available resources are UE capabilities available for receiving the multicast/broadcasting service and/or the UE-dedicated service at a current status of the UE. For example, the available resources may include at least one of an amount of data per time unit which the UE can process, the number of channel codes available, a transmitting or receiving bandwidth, and a scheme of channel coding and modulation, etc.

Alternatively, the UE may request transmission parameters for data transmission of the multicast/broadcasting service and/or the UE-dedicated service to the eNode B using the resource information. Here, the transmission parameters may include at least one of an amount of data per time unit which the UE can process (i.e., data rate), the number of channel codes available, a transmitting or receiving bandwidth, a scheme of channel coding and modulation, and ARQ parameters, etc. The UE may include a service identifier, a radio bearer identifier or a channel identifier for a service which is being received or will be received in the resource information to be transmitted.

The eNode B performs scheduling for data transmission of the multicast/broadcasting service and/or the UE-dedicated service based on the available resources or the transmission parameters received from the UE [S450].

The S440 step can be performed a prescribed number of times or repeated periodically or non-periodically. The eNode B may transmit to the eNode B information on whether the S440 step is performed the prescribed number of times or repeated periodically or non-periodically. For instance, the UE may perform the S440 step periodically according to a notification from the eNode B.

Alternatively, the UE may perform the S440 step in accordance with a condition varying due to a change ofUE resources or communication environment. For example, the S440 step is performed by the UE in case that a problem occurs or is expected to occur when receiving the multicast/broadcasting service and the UE-dedicated service simultaneously with current resources of the UE.

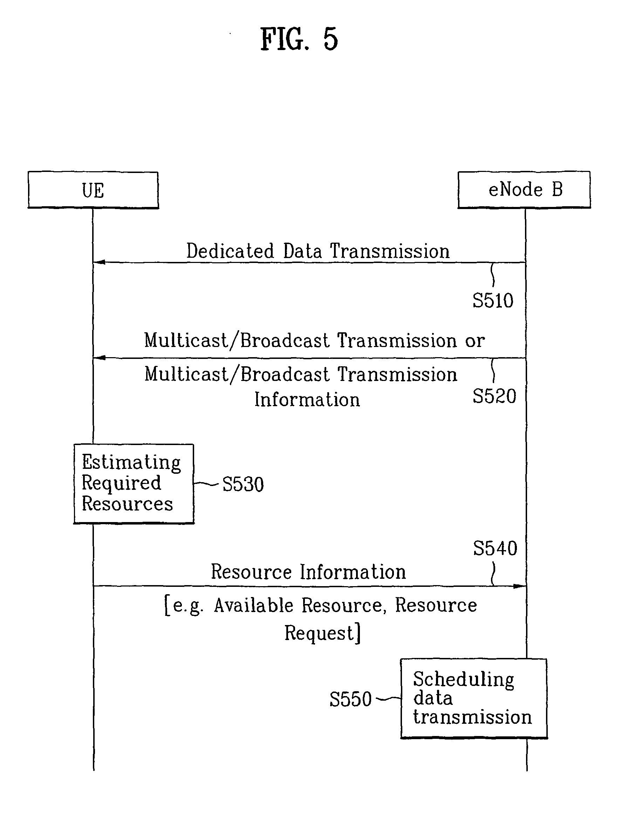

FIG. 5 is a flow diagram illustrating a method of controlling transmission resources in a mobile communication system in accordance with another embodiment of the present invention. The embodiment of FIG. 5 is an example that a UE receives a multicast/broadcasting service while the UE is receiving a UE-dedicated service.

Referring to FIG. 5, a UE is receiving data for a UE-dedicated service transmitted from an eNode B [S510]. The UE receives data for a multicast/broadcasting service or information associated with the data for the multicast/broadcasting service from the eNode B [S520]. The information associated with the data for the multicast/broadcasting service can be included to be transmitted in a paging message for the UE, a channel configuration message, a resource allocation message or a radio bearer configuration message related with the multicast/broadcasting service. The information associated with the data for the multicast/broadcasting service may includes transmission parameters (a size of data, a number of channel codes, bandwidth, a scheme of channel coding and modulation, ARQ parameters, etc.) and UE-capabilities for receiving the multicast/broadcasting service. In FIG. 5, the sequence of S510 and S520 can be changed.

The UE estimates resources available for receiving the multicast/broadcasting service and/or the UE-dedicated service and the UE determines whether it is possible to receive both the multicast/broadcasting service and the UE-dedicated service with total resources of the UE [S530]. Alternatively, the UE calculates resources required for receiving the multicast/broadcasting service and/or the UE-dedicated service.

The UE transmits resource information including the estimated resources available for receiving the multicast/broadcasting service and/or the UE-dedicated service [S540]. The available resources are UE capabilities which can be used for receiving the multicast/broadcasting service and/or the UE-dedicated service at a current status of the UE. For example, the available resources may include at least one of an amount of data per time unit which the UE can process, the number of channel codes available, a transmitting or receiving bandwidth, and a scheme of channel coding and modulation, etc.

Alternatively, the UE may request transmission parameters for data transmission of the multicast/broadcasting service and/or the UE-dedicated service to the eNode B using the resource information. Here, the transmission parameters may include at least one of an amount of data per time unit which the UE can process (i.e., data rate), the number of channel codes available, a transmitting or receiving bandwidth, a scheme of channel coding and modulation, and ARQ parameters, etc. The UE may include a service identifier, a radio bearer identifier or a channel identifier for a service which is being received or will be received in the resource information to be transmitted.

The eNode B performs scheduling for data transmission of the multicast/broadcasting service and/or the UE-dedicated service based on the available resources or the transmission parameters received from the UE [S550].

The S540 step can be performed a prescribed number of times or repeated periodically or non-periodically. The eNode B may transmit, to the eNode B, information on whether the S540 step is performed the prescribed number of times or repeated periodically or non-periodically. For instance, the UE may perform the S540 step periodically according to notifications from the eNode B.

Alternatively, the UE may perform the S540 step in accordance with a condition varying due to a change of UE resources or communication environment. For example, the S540 step is performed by the UE in case that a problem occurs or is expected to occur when receiving the multicast/broadcasting service and the UE-dedicated service simultaneously with current resources of the UE.

According to the present invention, UEs are capable of receiving multiples services without error or seamlessly in consideration of total UE capacities.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims.

### INDUSTRIAL APPLICABILITY

The present invention is applicable to such a wireless communication system as wireless Internet, mobile communication system and the like.

## Claims

1. A method of receiving at least one service at a user equipment (UE) in a mobile communication system, the method **characterized by** comprising:
receiving control information associated with a second service from a network while the user equipment (UE) receives the first service, wherein the control information indicates a necessary capability for receiving the second service;
estimating resources available at a current state of the user equipment (UE) for receiving the second service; and
transmitting resource information associated with the estimated resources to the network, wherein the second service is scheduled in the network based on the resource information.

2. The method of claim 1, wherein the resource information is transmitted periodically.

3. The method of claim 1, wherein the resource information is transmitted to the network when a notification from the network is received.

4. A method of transmitting at least one service to a user equipment (UE) in a network in a mobile communication system, the method **characterized by** comprising:
transmitting control information associated with a second service to the user equipment (UE) while the network transmits a first service, wherein the control information indicates a necessary capability for receiving the second service;
receiving resource information from the user equipment (UE), the resource information associated with resources of the user equipment (UE) which are available at a current status of the user equipment (UE) to receive the second service; and
performing scheduling of transmission for the second service based on the resource information.

5. The method of claim 1 or 4, wherein the control information is included in at least one of a paging message, a channel configuration message, a resource allocation message, and a radio bearer configuration message.

6. The method of claim 1 or 4, wherein the resource information includes at least one of an amount of data which the user equipment (UE) is able to process at a time unit, an available bandwidth, and a capacity for ARQ, Automatic Repeat request, process, at the current status of the user equipment (UE).

7. The method of claim 1 or 4, wherein the control information includes at least one of a bandwidth, transmission power, data rate, a scheme of channel coding and modulation, and a size of data for the second service.

8. The method of claim 4, wherein the resource information is received periodically.

9. The method of claim 1 or 4, wherein the network is any one of a base station, a Node B, an eNode B, a base station controller, and a radio network controller, RNC.

10. The method of claim 9, wherein the first service is a point-to-multipoint service and the second service is a dedicated service.

11. The method of claim 10, wherein the point-to-multipoint service is a multicast/broadcasting service and the dedicated service is a UE-dedicated service.

## Patentansprüche

1. Verfahren zum Empfangen wenigstens eines Diensts bei einem Anwendergerät (UE) in einem Mobilkommunikationssystem, wobei das Verfahren **gekennzeichnet ist durch**:
Empfangen von einem zweiten Dienst zugeordneten Steuerinformationen von einem Netz, während das Anwendergerät (UE) den ersten Dienst empfängt, wobei die Steuerinformationen eine notwendige Fähigkeit zum Empfangen des zweiten Diensts angeben;
Schätzen von Betriebsmitteln, die in einem momentanen Zustand des Anwendergeräts (UE) verfügbar sind, um den zweiten Dienst zu empfangen; und
Senden von Betriebsmittelinformationen, die den geschätzten Betriebsmitteln zugeordnet sind, wobei in dem Netz anhand der Betriebsmittelinformationen eine Zeitvorgabe für den zweiten Dienst geschaffen wird.

2. Verfahren nach Anspruch 1, wobei die Betriebsmittelinformationen periodisch gesendet werden.

3. Verfahren nach Anspruch 1, wobei die Betriebsmittelinformationen zu dem Netz gesendet werden, wenn eine Meldung von dem Netz empfangen wird.

4. Verfahren zum Senden wenigstens eines Diensts zu einem Anwendergerät (UE) in einem Netz in einem Mobilkommunikationssystem, wobei das Verfahren **gekennzeichnet ist durch**:
Senden von einem zweiten Dienst zugeordneten Steuerinformationen zu dem Anwendergerät (UE), während das Netz einen ersten Dienst sendet, wobei die Steuerinformationen eine notwendige Fähigkeit zum Empfangen des zweiten Diensts angeben;
Empfangen von Betriebsmittelinformationen von dem Anwendergerät (UE), wobei die Betriebsmittelinformationen den Betriebsmitteln des Anwendergeräts (UE) zugeordnet sind, die in einem momentanen Zustand des Anwendergeräts (UE) verfügbar sind, um den zweiten Dienst zu empfangen; und
Schaffen einer Zeitvorgabe zum Senden des zweiten Diensts anhand der Betriebsmittelinformationen.

5. Verfahren nach Anspruch 1 oder 4, wobei die Steuerinformationen in einer Paging-Nachricht und/oder einer Kanalkonfigurationsnachricht und/oder einer Betriebsmittelzuweisungsnachricht und/oder einer Funkträger-Konfigurationsnachricht enthalten sind.

6. Verfahren nach Anspruch 1 oder 4, wobei die Betriebsmittelinformationen eine Datenmenge, die das Anwendergerät (UE) pro Zeiteinheit verarbeiten kann, und/oder eine verfügbare Bandbreite und/oder eine Kapazität für einen Prozess zum Anfordern einer automatischen Wiederholung, ARO-Prozess, in dem momentanen Zustand des Anwendergeräts (UE) enthalten.

7. Verfahren nach Anspruch 1 oder 4, wobei die Steuerinformationen eine Bandbreite und/oder eine Sendeleistung und/oder eine Datenrate und/oder ein Schema zur Kanalcodierung und Kanalmodulation und/oder eine Datengröße für den zweiten Dienst enthalten.

8. Verfahren nach Anspruch 4, wobei die Betriebsmittelinformationen periodisch empfangen werden.

9. Verfahren nach Anspruch 1 oder 4, wobei das Netz eine Basisstation oder ein Node B oder ein eNode B, eine Basisstationssteuereinheit oder eine Funknetzsteuereinheit, RNC, ist.

10. Verfahren nach Anspruch 9, wobei der erste Dienst ein Punkt-zu-Mehrpunkt-Dienst ist und der zweite Dienst ein dedizierter Dienst ist.

11. Verfahren nach Anspruch 10, wobei der Punkt-zu-Mehrpunkt-Dienst ein Multicast/Rundsende-Dienst ist und der dedizierte Dienst ein UE-dedizierter Dienst ist.

## Revendications

1. Procédé de réception d'au moins un service au niveau d'un équipement utilisateur (UE) dans un système de communication mobile, le procédé étant **caractérisé en ce qu'**il comprend:
la réception d'informations de commande associées à un second service en provenance d'un réseau pendant que l'équipement utilisateur (UE) reçoit le premier service, les informations de commande indiquant une capacité nécessaire pour recevoir le second service;
l'estimation de ressources disponibles dans un état courant de l'équipement utilisateur (UE) pour recevoir le second service; et
l'envoi d'informations de ressources associées aux ressources estimées au réseau, le second service étant planifié dans le réseau sur la base des informations de ressources.

2. Procédé selon la revendication 1, dans lequel les informations de ressources sont envoyées périodiquement.

3. Procédé selon la revendication 1, dans lequel les informations de ressources sont envoyées au réseau lorsqu'une notification provenant du réseau est reçue.

4. Procédé d'envoi d'au moins un service à un équipement utilisateur (UE) dans un réseau dans un système de communication mobile, le procédé étant **caractérisé en ce qu'**il comprend:
l'envoi d'informations de commande associées à un second service à l'équipement utilisateur (UE) pendant que le réseau envoie un premier service, les informations de commande indiquant une capacité nécessaire pour recevoir le second service;
la réception d'informations de ressources en provenance de l'équipement utilisateur (UE), les informations de ressources étant associées à des ressources de l'équipement utilisateur (UE) qui sont disponibles dans un état courant de l'équipement utilisateur (UE) pour recevoir le second service; et
la réalisation d'une planification d'envoi pour le second service sur la base des informations de ressources.

5. Procédé selon la revendication 1 ou 4, dans lequel les informations de commande sont incluses dans au moins un message parmi un message d'appel, un message de configuration de canal, un message d'allocation de ressources et un message de configuration de support radio.

6. Procédé selon la revendication 1 ou 4, dans lequel les informations de ressources comprennent au moins un élément parmi une quantité de données que l'équipement utilisateur (UE) est capable de traiter par unité de temps, une bande passante disponible et une capacité pour processus de demande de répétition automatique, ARQ, dans l'état courant de l'équipement utilisateur (UE).

7. Procédé selon la revendication 1 ou 4, dans lequel les informations de commande comprennent au moins un élément parmi une bande passante, une puissance d'émission, un débit de données, un système de codage de canal et de modulation et une taille de données pour le second service.

8. Procédé selon la revendication 4, dans lequel les informations de ressources sont reçues périodiquement.

9. Procédé selon la revendication 1 ou 4, dans lequel le réseau est un élément quelconque parmi une station de base, un noeud B, un noeud B évolué, un contrôleur de station de base et un contrôleur de réseau radio, RNC.

10. Procédé selon la revendication 9, dans lequel le premier service est un service point à multipoint et le second service est un service dédié.

11. Procédé selon la revendication 10, dans lequel le service point à multipoint est un service de diffusion/multidiffusion et le service dédié est un service dédié d'équipement utilisateur.
